# EUROPEAN PATENT SPECIFICATION

(11) **EP 1 316 895 B1**
(45) Date of publication and mention of the grant of the patent: **14.06.2006**
(21) Application number: 02257944.5
(22) Date of filing: 19.11.2002
(51) Int. Cl.: G06F 17/21, G06F 17/30

(54) **Improvements relating to data delivery**
Verbesserungen zur Datenübertragung
Améliorations du transfert de données

(30) Priority: 20.11.2001 GB 0127721
(43) Date of publication of application: 04.06.2003
(73) Proprietor: Hewlett-Packard Company A Delaware Corporation, Palo Alto, CA 94304 (US)
(72) Inventor: Giannetti, Fabio, Bradley Stoke, Bristol BS32 9DS (GB)
(74) Representative: Lawrence, Richard Anthony

(56) References cited:
- CERI S ET AL: "Web Modeling Language (WebML): a modeling language for designing Web sites" COMPUTER NETWORKS, ELSEVIER SCIENCE PUBLISHERS B.V., AMSTERDAM, NL, vol. 33, no. 1-6, June 2000 (2000-06), pages 137-157, XP004304764 ISSN: 1389-1286
- ABRAMS M ET AL: "UIML: an appliance-independent XML user interface language" COMPUTER NETWORKS, ELSEVIER SCIENCE PUBLISHERS B.V., AMSTERDAM, NL, vol. 31, no. 11-16, 17 May 1999 (1999-05-17), pages 1695-1708, XP004304584 as retrieved from http://www8.org/w8-papers/5b-hypertext-med ia/uiml/uiml.html ISSN: 1389-1286

## Description

This invention relates to an improved method and apparatus for generating data suitable for transmission, especially, but not exclusively, to devices remote from a processing apparatus, such as a computer.

Many documents are now published electronically, and can be intended for publication on a number of different mediums. For example the same document can be published upon a variety of devices including any of the following: a web page, a WAP (wireless application protocol) telephone, a web enabled television, a personal digital assistant (PDA) (whether landscape, or portrait versions), a printer, etc. Each of these devices has considerably different display capabilities and as such the same document cannot be displayed on each of the devices without modification.

Over the passage of time natural methods of navigating paper-based documents have evolved. For example books are generally split into chapters, reports are split in sections, and sub-sections, etc. However, navigation developed for a paper-based document does not necessarily work with the electronic display devices described above.

For example web pages have an inherent navigation built-in by the existence of hyper links, which allow a user to naturally move about the document. However, due to the much more limited display characteristics of other electronic devices (for example the WAP enabled telephone) the same navigation techniques cannot be used on all electronically displayed devices. Therefore, if a document is to be displayed correctly on a plurality of electronic devices having different display characteristics then it is necessary for an author to write a plurality of different documents. Writing such a plurality of documents can be time consuming, and may lead to discrepancies between the documents.

Previously, a transform language such as XDNL has been used to split a lengthy document into a number of smaller sections that were more suitable for display on devices having displays that were not suitable for displaying large sections of text.

A further method of providing content to a variety of data receiving devices is shown in an article be Ceri S et al: "Web modelling language (WebML): a modelling language for designing web sites" published in Computer Networks, Elservier Science Publishers B.V. Amsterdam NL, vol. 33 no 1-6 June 2000 (2000-06), pages 137-157 XP004304764 ISSN: 1389-1286.

The invention is set out in the claims.

There now follows by way of example only a detailed description of the present invention with reference to the accompanying drawings of which:
**Figure 1** schematically shows the architecture of a computer capable of acting as a server for this invention;
**Figure 2** schematically shows how a document can be sent to a number of different devices;
**Figure 3** schematically shows how a single document can be sent to a plurality of different devices;
**Figure 4** schematically shows the navigational structure of a document sent to a device having a low capability display;
**Figure 5** schematically shows the navigational structure of a document sent to a device having a medium capability display;
**Figure 6** schematically shows the navigational structure of a document sent to a device having a high capability display;
**Figure 7** schematically shows a device having a low capability display displaying a document;
**Figure 8** schematically shows a device having a medium capability display displaying a document;
**Figure 9** schematically shows a device having a high capability display displaying a document;
**Figure 10** shows a flow chart outlining the method; and
**Figure 11** outlines the structure of the data held in navigation description document.

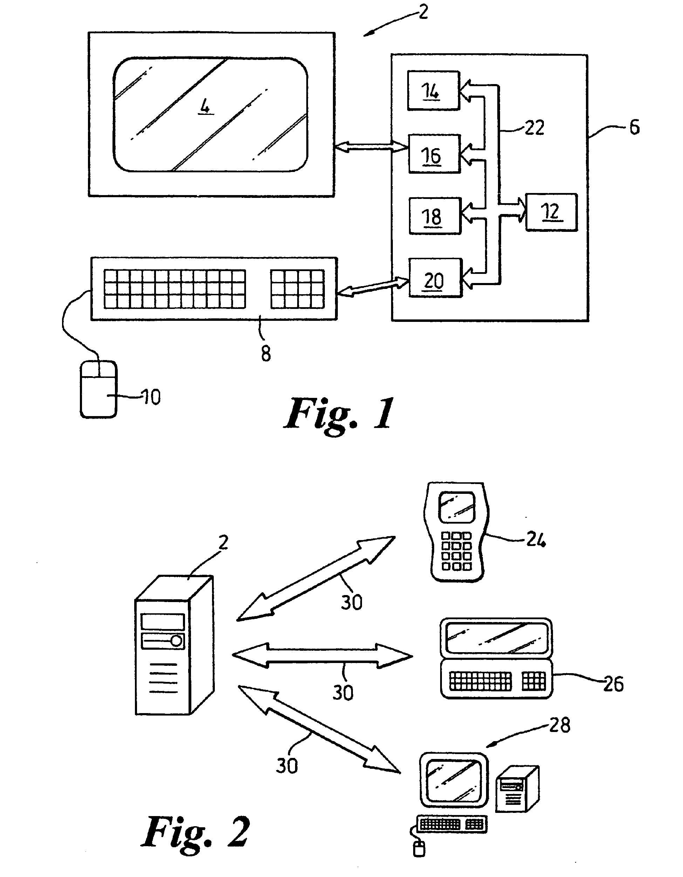

This particular invention is applicable to distribute data electronically, and in particular via the World Wide Web, or in short the web. Such technology is well known. Generally the data to be distributed is held on a processing apparatus, or server 2, as shown in Figure 1, and can be requested by any number of devices that are capable of communicating with the server 2. Indeed, a first device can make a request for data to be sent to a second device.

In this embodiment the processing apparatus, or server 2, comprises a display 4, processing circuitry 6, a keyboard 8, and mouse 10. The processing circuitry 6 further comprises a processing unit 12, a hard drive 14, a video driver 16, memory 18 (RAM and ROM) and an I/O subsystem 20 which all communicate with one another, as is known in the art, via a system bus 22. The processing unit 12 comprises an INTEL PENTIUM series processor, running at typically between 900MHz and 1.7GHz.

As is known in the art the ROM portion of the memory 18 contains the Basic Input Output System (BIOS) that controls basic hardware functionality. The RAM portion of memory 18 is a volatile memory used to hold instructions that are being executed, such as program code, etc. The hard drive 14 is used as mass storage for programs and other data.

Other devices such as CDROMS, DVD ROMS, network cards, etc. could be coupled to the system bus 22 and allow for storage of data, communication with other computers over a network, etc.

The server 2 could have the architecture known as a PC, originally based on the IBM specification, but could equally have other architectures. The server may be an APPLE, or may be a RISC system, and may run a variety of operating systems (perhaps HP-UX, LINUX, UNIX, MICROSOFT NT, AIX^{™}, or the like).

In this embodiment data, in this case a document is held on the server 2, which stores the data and distributes it on request to a requesting data-receiving device. The requesting data-receiving device can be any device that is capable of communicating with the server 2. When the server 2 receives a request from a data-receiving device or another device it will forward the requested data onto the appropriate data-receiving device. This is schematically represented in Figure 2, which shows a WAP enabled telephone 24, a landscape oriented PDA 26 and a PC 28 in communication with the server via a network connection 30. This list of devices that can request data from the server is not exhaustive.

It will be appreciated that each of the data-receiving devices 24,26,28 shown in Figure 2 has a different display capability and therefore, a document tailored for one of the devices will not necessarily be displayed correctly on the other devices. An example of a WAP enabled telephone is the NOKIA 7110 that has a black and white display of 96 x 65 pixels, but only 96 x 44 pixels are available for body data providing 4 lines of text at roughly 15 characters per line.

In this example the PDA 28 is an HP Jornada 690 that operates using the Microsoft Windows CE operating system, and runs Microsoft Pocket Explorer as it means of communicating with the server 2. The Jornada 690 has a keyboard, as well as a touch screen input, and can access the web, etc. using modem, or network cards connected through its PC card slot. The screen of the Jornada 690 can display colour and has a resolution of 640x240 pixels (i.e. landscape). (It is also possible for the PDA to have a portrait perspective screen).

The PC 30 can have an architecture similar to that shown in Figure 1. Its display is likely to be able to display 24-bit true colour (in excess of 16 million colours) at a resolution of 1024x768.

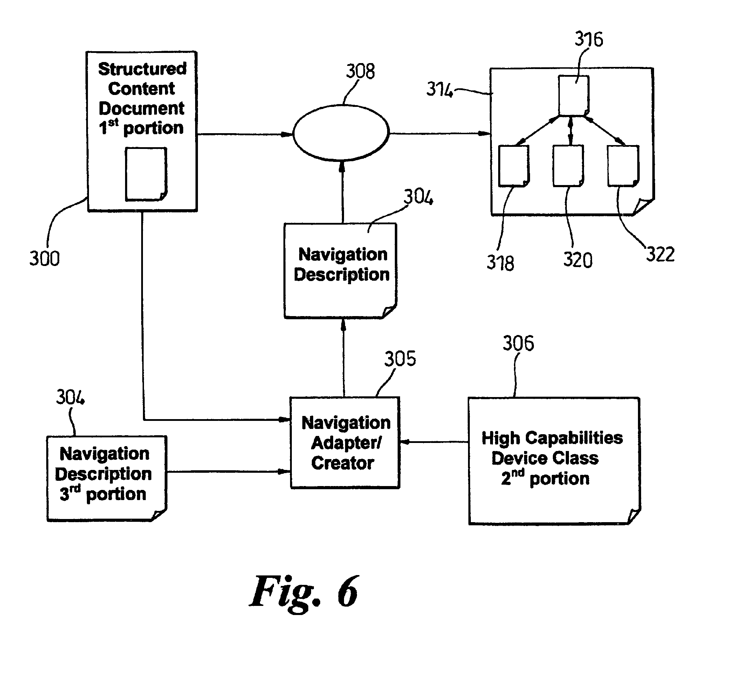

In view of the fact that each of the data-receiving devices 24,26,28 the software/firmware running on these devices is arranged to provide a user thereof with different mechanisms for navigating a document displayed on the device, which is represented in Figures 6, 7, 8.

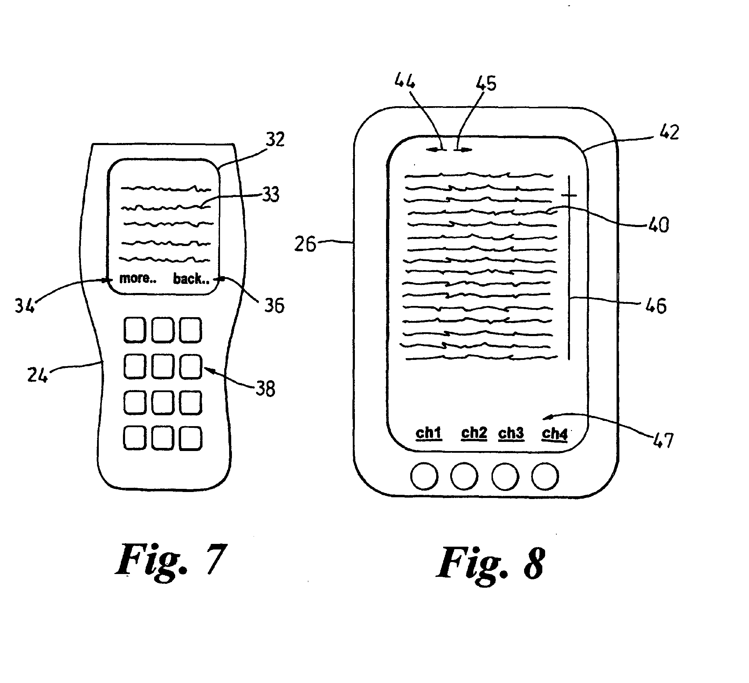

Figure 7 shows a WAP enabled telephone 24 that has a low capability display 32. When the display is required to display more lines of text 33 than will fit on a screen at any one time, the telephone 24 is arranged to display "more" 34, and "back" 36 indicating to a user that he/she can see earlier and later lines of text. It may be appropriate to display only one of "more", "back" depending whether there are earlier or later lines of text 33 that can be displayed. To activate the "more", "later" options a user simply presses designated buttons on the keypad 38 of the telephone 24. The document being displayed by the WAP telephone 24 specifies to where within the document the "more" 34 and "back" 36 options take a user.

Figure 8 shows a portrait oriented PDA 26 with lines of text 40 displayed thereon. Although the display 42 of the PDA is much larger than that of the telephone 24 it is smaller than that of the computer 28, and it can therefore, display an intermediate level of text. A user is provided with "forward" 44 and "back" 45 buttons that allows him/her to access the next or previous sections of text that have been visited in his/her recent viewing history. A scroll bar 46 is provided that allows the user to move the text 40 up/down the screen so that text that has run off the bottom/top of the screen 42 can be displayed. Links 47 are shown at a bottom region of the screen 42 that allow a user to access other portions of the document being displayed thereon. It will be appreciated that the functionality of the "forward" button 44, "back" button 45 and the scroll bar 46 are provided by the browser running on the PDA and not by the document being displayed thereon.

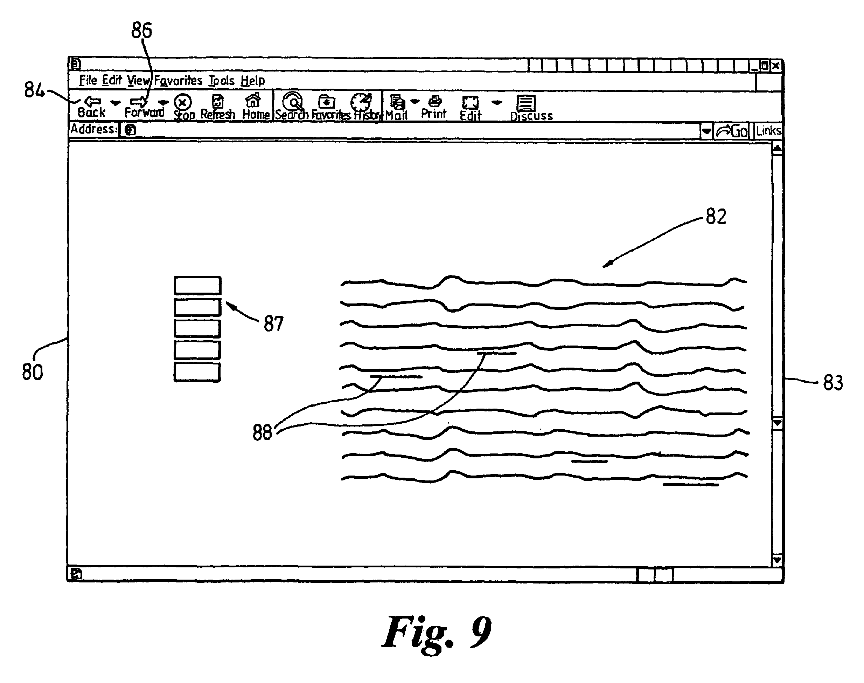

Figure 9 shows a browser window 80 that is running on a computer 28. The browser window 80 provides a much larger area of text 82, than that provided by the WAP enabled telephone 24, or the PDA 26. The browser window 80 provides a "back" button 84, and a "forward" button 86 that can be operated using the Graphical User Interface (GUI) provided by the computer 28 on which the browser window 80 is running. The "forward" and "back" buttons allow a user to move to the next, or previous page that has been visited in his/her viewing session. A scroll bar 83 is provided that allows a user to scroll down the text 82 displayed on the browser window should the text not fit within the display area provided. Buttons 87 and links 88 (usually denoted by the underlining a word) are provided on the screen and allow a user to jump to other information. Again it will be appreciated that the forward button 86, the back button 84, and the scroll bar 83 are provided by the browser running the window, whereas the buttons 87, and the links 88 are provided by the document being displayed by the browser.

Thus, as will be appreciated from the foregoing descriptions that although the data-receiving devices 24,26,28 have similar display mechanisms for allowing the display of data that the amount of data that can be displayed at any one time and therefore how these mechanism are used by the user varies from device to device. Thus, it is has previously been a requirement that a separate document should be written for each device on which it was to be displayed. That is a separate version of the document would be required for a telephone 24, a PDA 26, a browser on a computer 28. The present invention allows a single content document to be written which can be transformed before transmission into a format suitable for display on each of the data-receiving devices 24,26,28

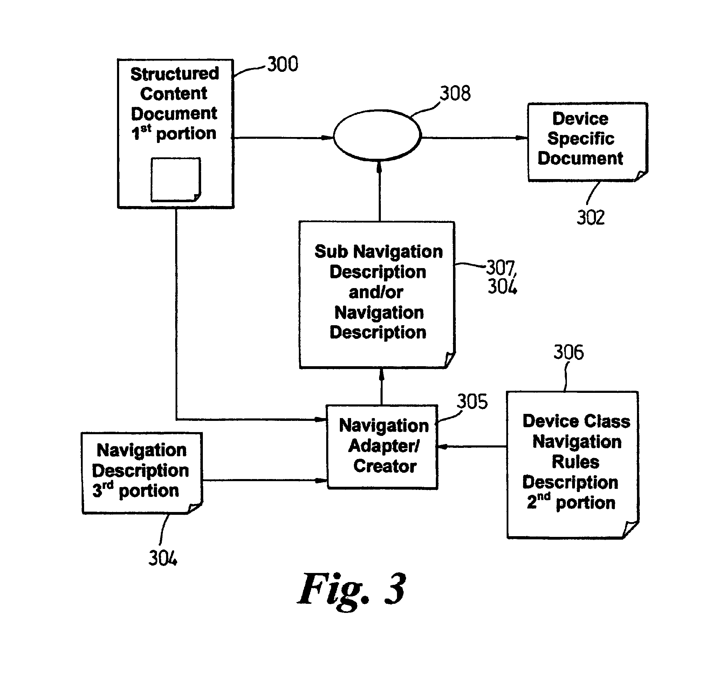

The processes outlined for transforming a content document will be described in relation to Figures 3 to 6, and 10, and appendices I to IX which show fragments from example XML code, and XSL transformations that can be adapted to perform the present invention.

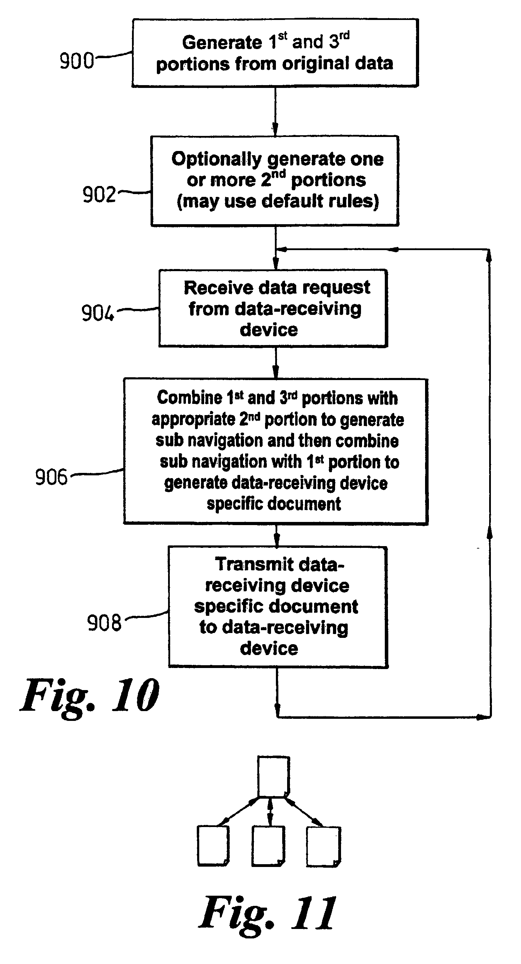

The author of a document specifies a first portion of the data, generally, in a device independent manner, that is writes a content document 300, and navigation document 304 that is device independent (900 in Figure 10) from original data that it is desired to send to at least one data-receiving device. However, the content document is written in such a manner that the data it contains is specified such that the processing unit 12 of the server 2 can generate data-receiving device specific documents 302 therefrom. An example of a content document 300 is provided in appendix I

In generating the data-receiving device specific documents 302, the processing unit 12 adds automatically the navigation instructions specified in a second portion 306 to generate a sub navigation description 307 (modified third portion) that allows the device specific document to be generated. The second portion 306 is specified for a particular data-receiving device, or class of devices. (902 in Figure 10). For example, the processing unit 12 adds the instructions that instruct how the "more" 34, "back" 36 operate, that specifies the links 47, the buttons 87, and the links 88. '

The role of the second portion may be built into the system so that the second portion is not provided as a separate file. However, it will be appreciated that in such an arrangement although not provided as a separate file, etc. the second portion is still present as a set of default rules.

As will be seen from Figure 3 navigation description 304, the first portion 300 and the data-receiving device specific portion 306 are combined using a navigation adapter/creator 305 transformation to produce a sub-navigation description document 307 (modified third portion) if it is required for the particular class of display device. Next, if created, the sub navigation description document 307, and the navigation description 304 are combined with the content document 300 using a transform 308 to generate the device specific document 302.

The code shown in the appendices is written in XML (extensible Mark-up Language), and XSL (eXtnesible Stylesheet Language), but could be equally stored using other mark-up languages or as a database. XML requires pairs of tags to be placed within a document. Theses tags do not specify how the information should be presented, but specify the content of the information between the pairs of tags. The skilled person will fully understand XML, but a full description can be found at http://www.w3.org, and the brief description below will aid his/her understanding.

The skilled person will appreciate how an XML document is structured: written in words, or data sub-items, which are collected into data sub-item groups. The data sub-item groups can comprise sentences, paragraphs, or simply collections of words. The data sub-item groups, or even just data sub-items, are placed between pairs of tags.

The tags appear as follows: <variable>, and </variable>, with variable being any word, or character string acceptable according to the XML recommendation. Further, each data sub item group can be itself broken down into a number of sub-items. This structure is convenient and allows for easy manipulation and searching of the complete data item.

In Example of the Appendix I, text elements are provided between the opening XML tag <TextElmuent> and the closing XML tag </TextElement>. Within these tags are sub-items that may specify the content for that TextElement, any key sentences of that TextElement, and any ExternalKeyWords for that TextElement. Each sub-item has its own corresponding tags. Using these tags, it is easy to extract one or more selected parts of the data- The sub-items mentioned in this paragraph will be expanded upon hereinafter.

Appendix I shows how two paragraphs from this specification may be written in a form suitable as a content document 300 to realise the present invention. The first XML tag is the <GroupElement> tag that specifies the text of one particular chapter. Within the <GroupElement> tag it is specified that the chapter has been split into 14 <ComplexElements> (cmpx ="14"), and 25 <TextElements> (txt="25") (for the sake of brevity only some of these have been shown).

The text between the <ComplexElement> tags is a portion of the chapter that the author has determined can be split onto different pages to be displayed by a data-receiving device. Therefore, paragraphs within the <ComiplexElement> tags are specified as being on the same page. The opening tag of the next page: <ComplexElement number="2"> is the last line of the code shown in appendix I. It will be noted that the <ComplexElement> tags are divided into smaller portions, or sub-elements, between<TextElement> tags. Each of the sub-elements is of such a size that it should be suitable for display on a device having the lowest display capability.

It will be appreciated that as length of the text within the <ComplexElement> tags decreases the granularity of the document increases, and thus, the document can be displayed on devices having lower capability displays.

The division of the chapter into the <ComplexElement> tags are shown by way of example only. There may be alternative ways in which the data contained in a chapter could be broken down. For example, in some embodiments the chapters could automatically be split after a predetermined number of words, characters of the like.

The code of appendix I is written in such a manner through use of the <ExternalKeyWord> tags that capitalisation of certain words can be altered. For example the first letter "e" of the word each 1000 is specified as a capital 1002 between the two XML tags <ExternalKeyWord> and </ExternalKeyWord>and as a lower case letter outside these tags 1004. These <ExternalKeyWord> tags allow summarised text to be tailored so that it appears correctly on devices having lower display capabilities.

The appendices contain example code for the content document 300, the navigation description 304, the navigation adapter/creator transform 305, the sub-navigation description 307, and the transform 308 to combine the sub-navigation description with the content document as follows (In this embodiment the device class navigation rules 306 are built into the system and are consequently not specified as separate files):

| | |
|---|---|
| **Appendix I** | Fragment of example content document 300 |
| **Appendix II** | Navigation description 304 written for medium, or high capability display device |
| **Appendix III** | Sub Navigation description 307 for low capability device |
| **Appendix IV** | Transforms 308 to combine content document 300 and sub |
| | navigation description 307 for low capability device |
| **Appendix V** | Sub Navigation description 307 for medium capability device |
| **Appendix VI** | Transform 308 to combine content document 300 and sub navigation description 307 for medium capability device |
| **Appendix VII** | Navigation description 304 written for low capability display device |
| **Appendix VIII** | Transform 308 to combine content document 300 and sub navigation description 307 for high capability device. |
| **Appendix IX** | Navigation adapter / creator transform 305 for low or medium capability devices |

It will be noted that the Appendices contain no code for a navigation adapter/creator algorithm 305, nor for a sub navigation description document 307 for a high capability device. It will be appreciated that this code is not required for a device capable of displaying the original format, and so which does not require the addition of sub-navigation, and therefore no modified third portion is created, as can be seen from Figure 6.

In this embodiment the sections are chapters and the navigation document, or third portion, specifies that there are four chapters 1100, that chapter one is the first chapter in the sequence 1102, that chapter two is the second chapter in the sequence 1104, that chapter three is the third chapter in the sequence 1106, and that chapter four is the fourth chapter in the sequence 1108. These reference numerals refer to appendix II.

Both the content document shown in appendix I, the navigation documents 304, shown in each of appendices II, and VII are written by an author, and are necessary to specify display of the document correctly. The content document, as its name suggests, contains the content that it is desired to display. The navigation document contains a definition of how portions of the content document relate to one another.

A device class navigation document 306 is written for a specific class of device, and is accessed during processing of the navigation description in order to generate the device specific document 302. The transformation document specifies to where specific links within the final device specific document 302 will be connected.

It will be appreciated that only the content document 300 and the navigation document 304 need to be written afresh for a new document that it is desired to display on a number of electronic devices, as long as the links specified in the device specific navigation descriptions 306 still apply.

When it is desired to generate a device specific document 302 (e.g. after a request for data has been made (904 in Figure 10) the processing apparatus 6 runs the navigation adapter/creator transform 305. This navigation adapter /creator transform 305 combines the device class navigation rules 306, with the navigation document 304 that outlines how sections of the content document 300 are inter-related and the content document 300, to generate the sub-navigation description 307 (906 in Figure 10). This sub-navigation description 307 (if generated) and the navigation description 304 is then combined with the content document 300 using further transforms and is then transmitted to the data-receiving device for which a request for data has been made (908 in Figure 10).

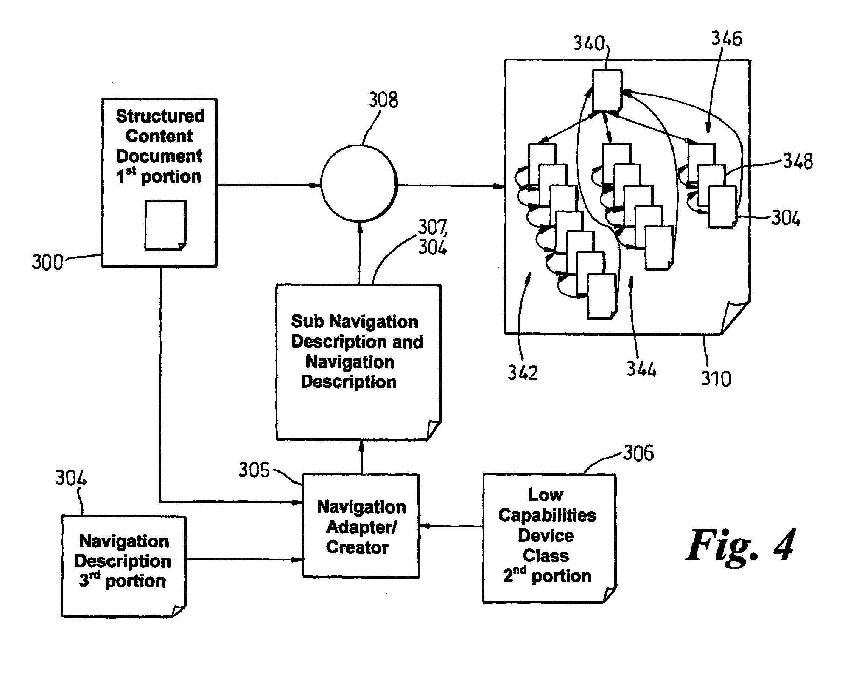

Figures 4, 5, and 6 schematically show the possible structure of device specific documents 310, 312, 314 generated for a low, medium, and high display capability device respectively.

Looking at Figure 6 the device specific document 314 comprises four separate pages 316, 318. 320, 322, each of which is generated from the original content document 300. It will be seen that this structure is the same as the structure in Figure 11, and thus it will be appreciated that the high capability device can display the content document 300 as intended by the author. There is therefore no need to generate a sub-navigation description 307, and it is simply the navigation description 304 that is combined with the content document 300.

The first page 316 comprises a cover, as defined in the navigation document 304. This cover 316 has links to chapter one (page 318), chapter two (page 320), and chapter three (page 322). Because the device has a high capability display it can display a sufficient amount of detail on any one page to allow the whole of the chapter to be easily read using the standard navigation buttons of for example the browser window 80. Effectively, the navigation description 304 expressed by the author can be represented without making any kind of transformation, because of the high capability display. Example code and transformations used for a high capability device are shown in appendices VII and VIII. It will be appreciated that because the high capability device can display the content document using the original navigation it is not needed to increase the granularity of the document, and therefore, a navigation adapter/creator transform 308 is not required to generate a sub-navigation document 307.

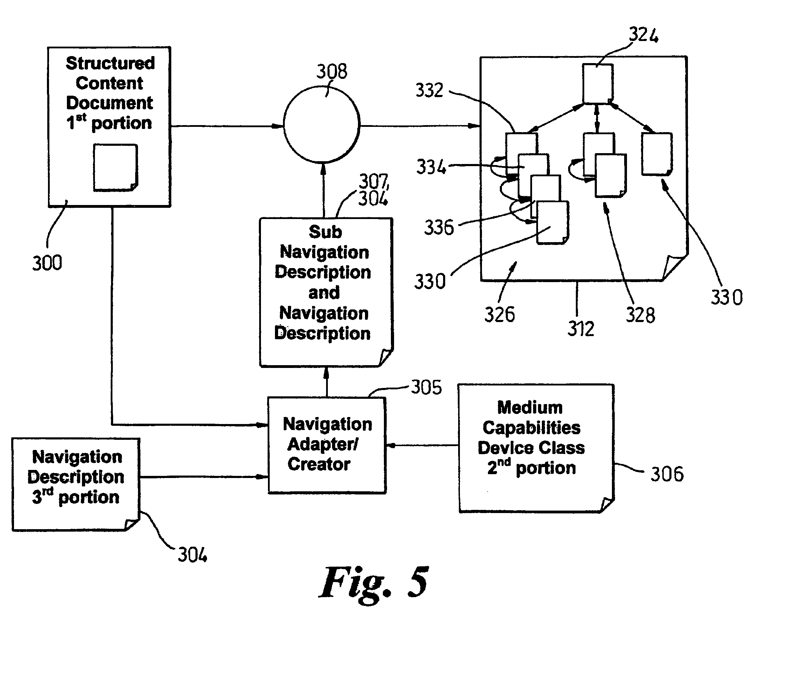

Looking at Figure 5 it can be seen that the device specific document for the medium display capability device 312 has a different structure compared to that of the high capability device. As with the device specific document 314 for the high capability display device, the document 312 comprises a cover 324, with links to chapters one 326, two 328, and three 330. However, unlike the chapters for the high capability device it is not convenient to display a whole chapter on a single page, and therefore, a sub-navigation sequence is employed that preserves the concept of the navigation expressed in the navigation document 304, but generates a plurality of divided portions for each chapter. Therefore, the navigation adapter/creator algorithm 305 is used to generate a sub-navigation document, or modified third portion 307. The header linking to the chapters is maintained, but bi-directional links between the now necessary sub pages are provided. The bi-directional links provide instructions as to how the divided portions are inter-related. Therefore, the device specific navigation description 306 causes the chapters to be split across a number of pages, each having a bi-directional link therebetween.

Taking chapter one as an example, this has been split across four pages 332,334,336,338. Each of these pages has a bi-directional link to its neighbour, and the first page in the chapter (page 332) has a bi-directional link to the cover 324. Thus, a user can move forward and backwards between both the cover 324 and the pages making up the chapter 332,334,336,338, using for example links 47 (and once the links have been activated the forward 45 and back buttons 44) of the PDA browser. The bi-directional links are represented by the double headed arrows.

Example code for the medium capability device is provided in appendices II, IV, V, and VI.

Looking at Figure 4, it can be seen that the device specific document 310 for the low capability device has a different structure to that for both the medium, and high capability devices. As with the documents for the medium 312, and high 314 capability display devices the document 310 comprises a cover 340 that provides links to chapters one 342, two 344 and three 346.

However, it should be noted that again, there are more pages for each chapter when compared with the document 312 generated for the medium capability device, again providing a plurality of divided portions per chapter. Taking chapter three 346 as an example, this has now been split into three separate pages 348,350,352. There are bi-directional links between each of the pages 348,350,352 so that a user can move forward and backward between them using the for example the more 34 and back 36 feature of a WAP telephone 24. Again, the bi-directional links provide instructions as to how the divided portions are inter-related. The diagram shows that the pages within a chapter 342,344,346 have bi-directional links therebetween (as represented by the double headed arrows), but that the cover and chapter 342,344,346 only have a uni-directional link therebetween. Thus, once a user has entered a chapter they must page through each of the pages 348,350,352 before being able to return to the cover 340 and thus, access another (or the same) chapter 342,344,346.

The structure described in relation to Figure 4 can be seen in the XML and XSL code shown appendix III. Taking the code fragment referenced by the bracket 400 it can be seen that a bi-directional link is specified between the XML tags <BidrectionalLink> and </BidirectionalLink>. Within this link definition two "SimpleLinks" are defined: a first specifies that the previous or "back" button 36 should be linked to section 1_1 of the content document; and the second specifies that the next, or "more" button 34 should be linked to section 1_3 of the content document.

Example code used to generate the device specific document 302 for a low capability device is shown in appendices III, IV, VII, and IX.

Thus, a single navigation description 306 is provided for each of the low, medium, and high capability devices and the processing apparatus 6 adds the sub navigation parts according to the class of the device. It will be appreciated that although this description refers to three (low, medium, and high capability) devices there could in fact be any number of device specific navigation descriptions.

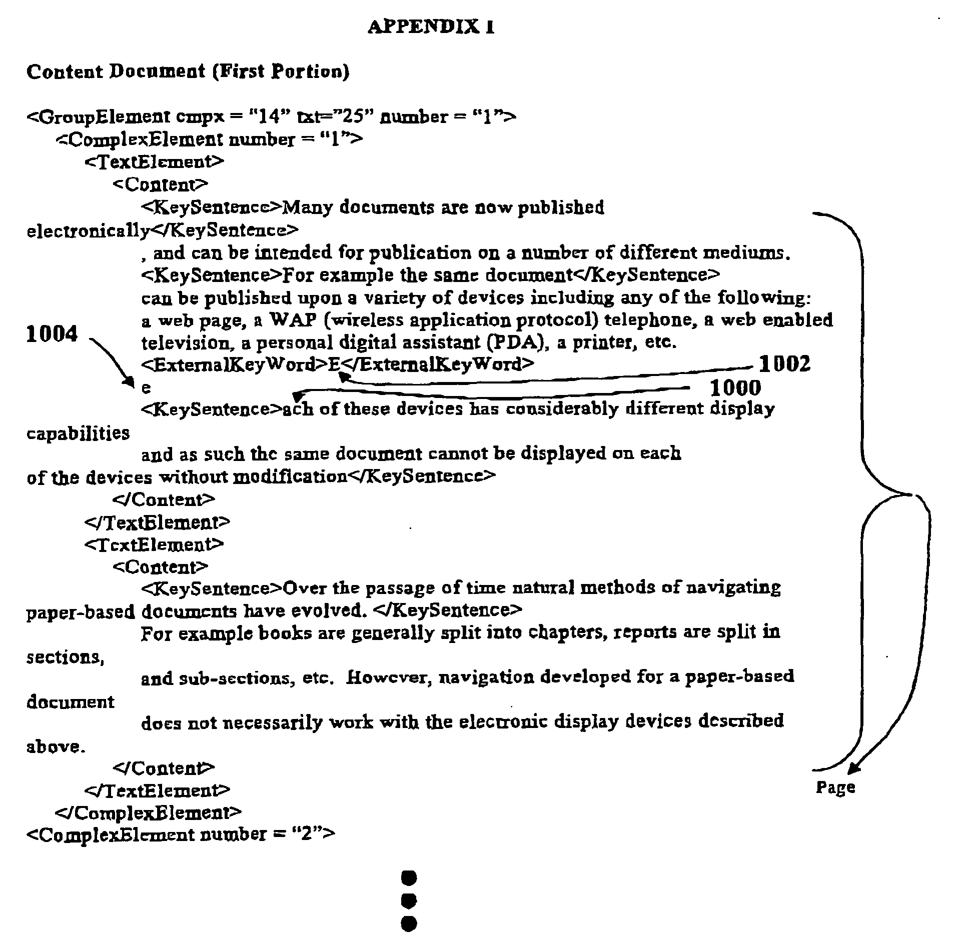

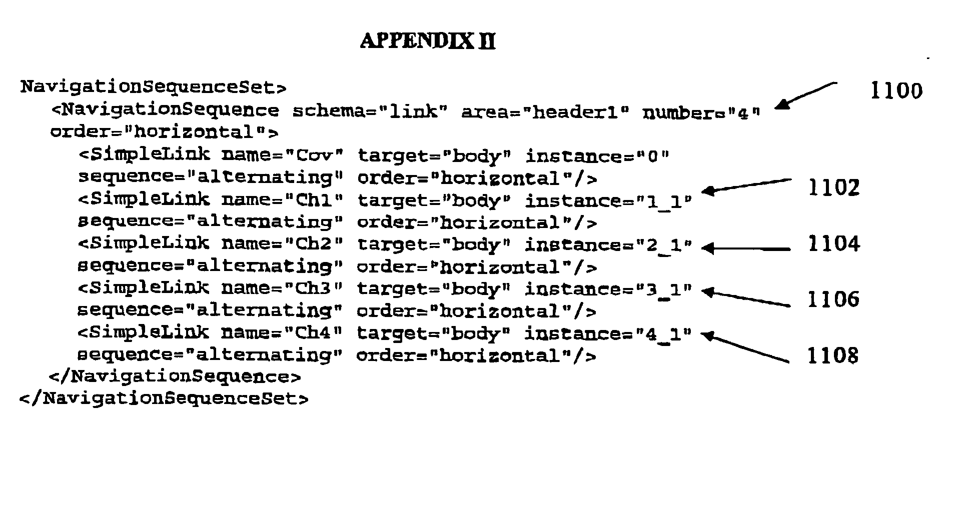

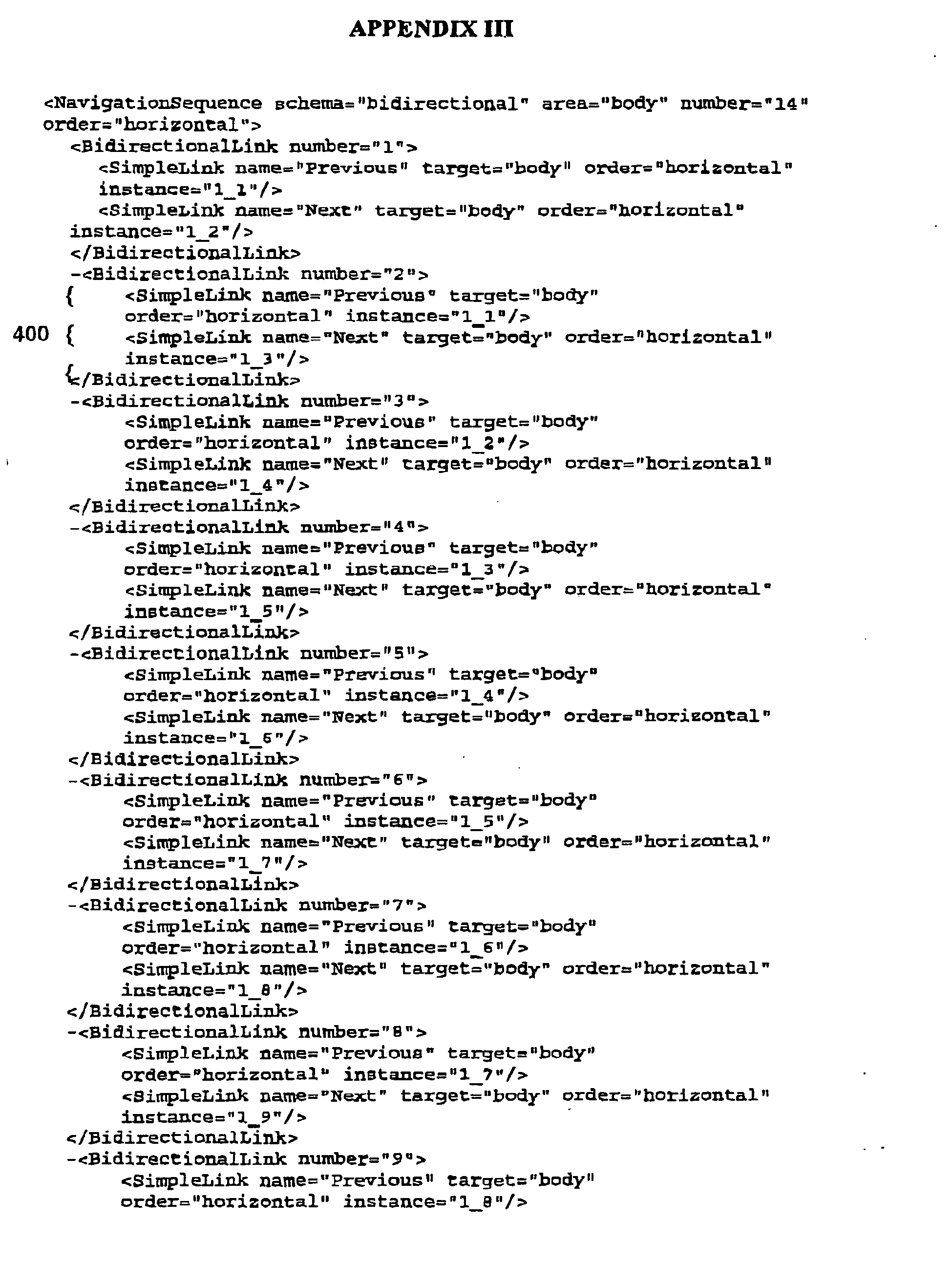

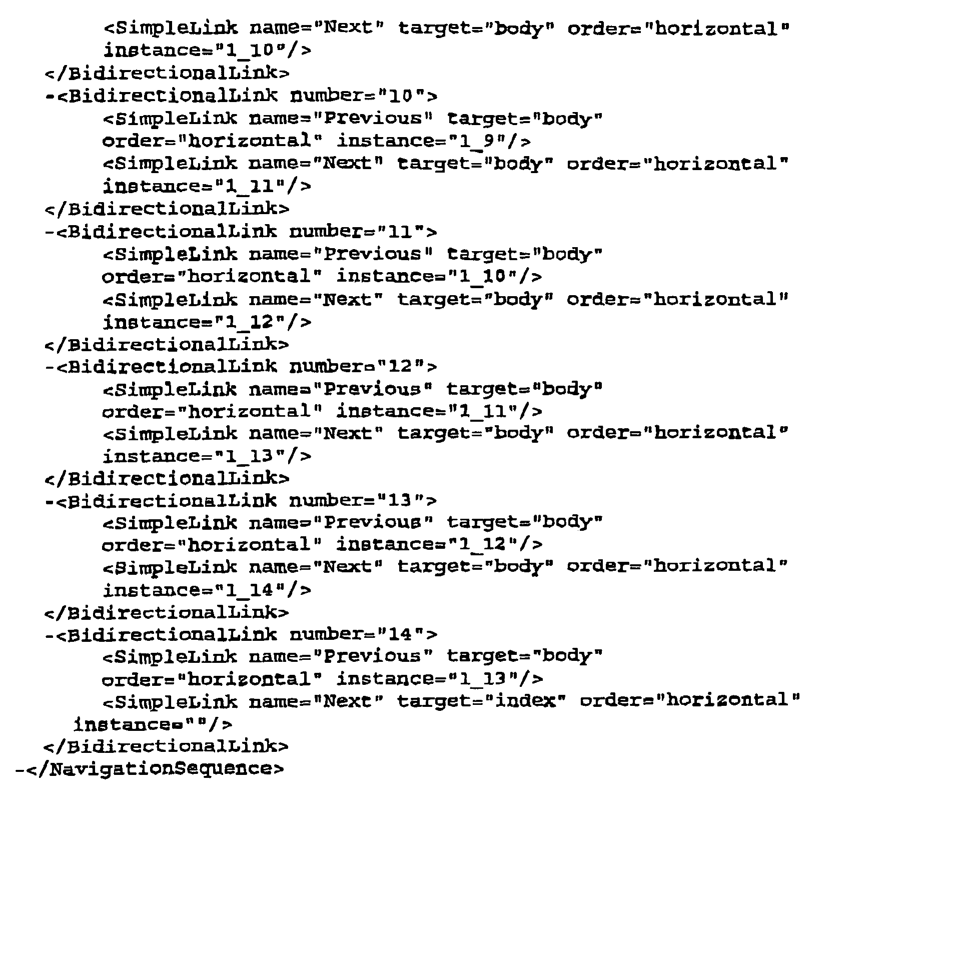

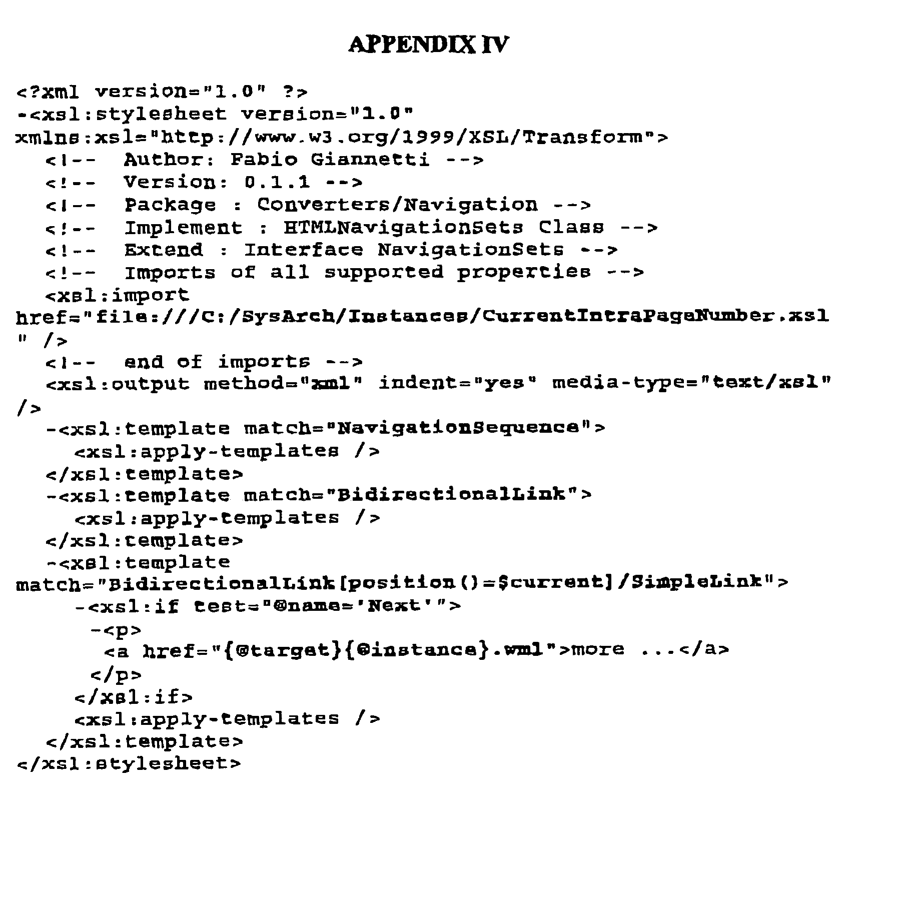

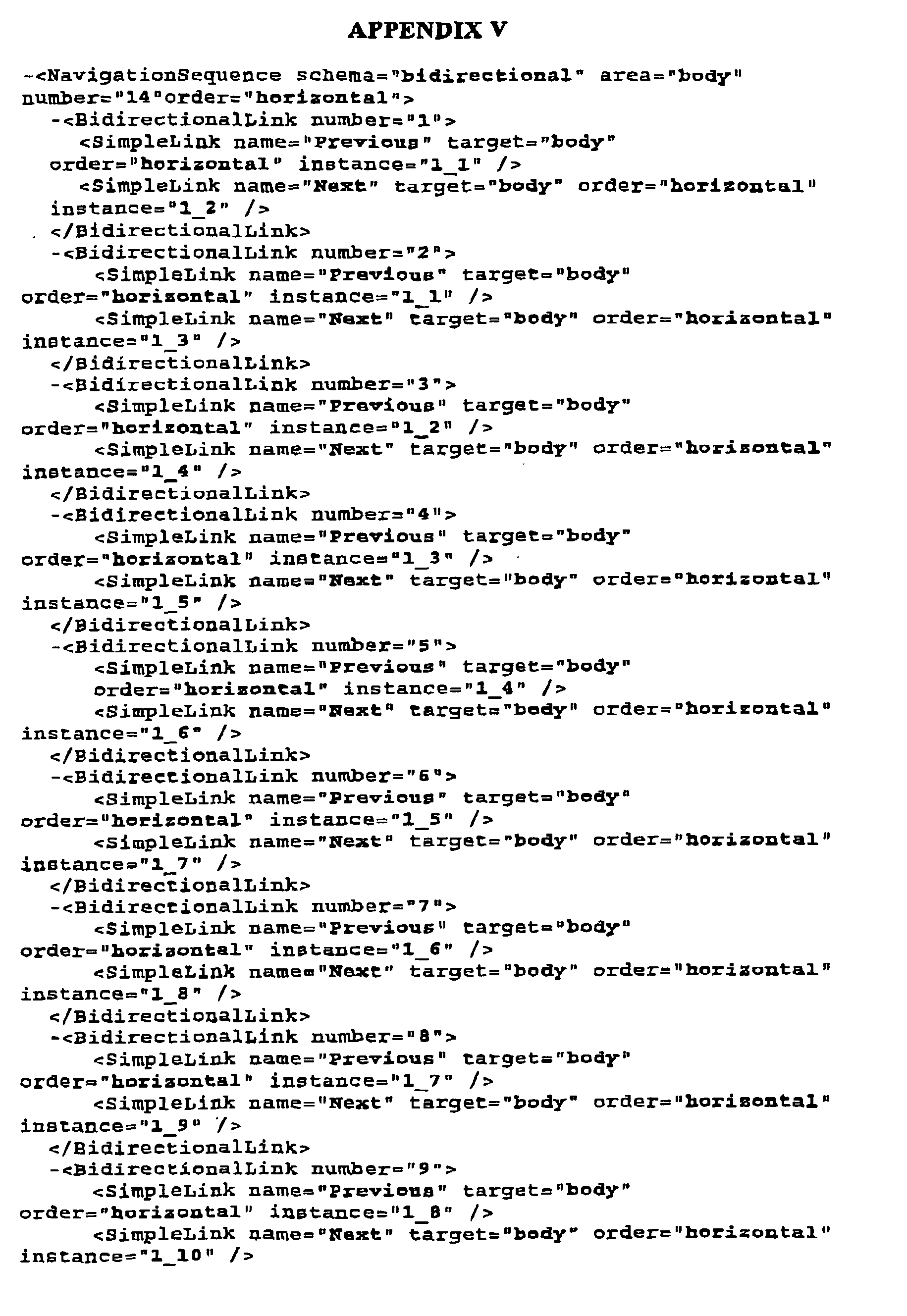

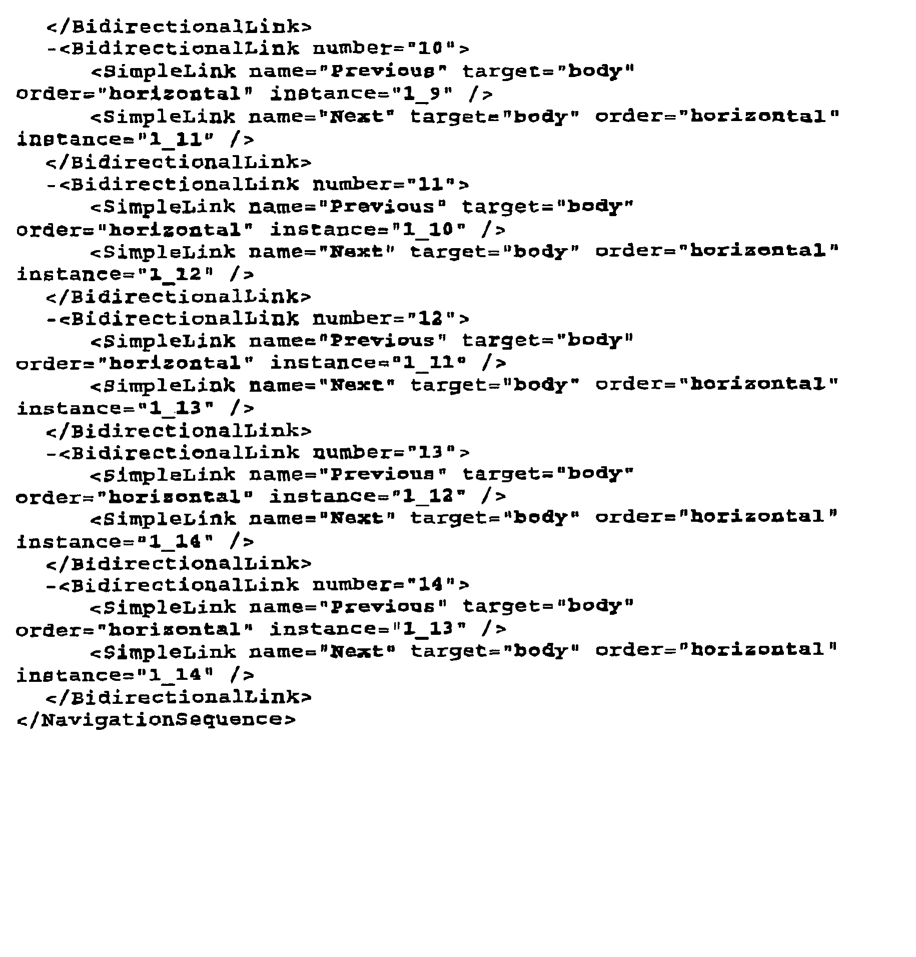

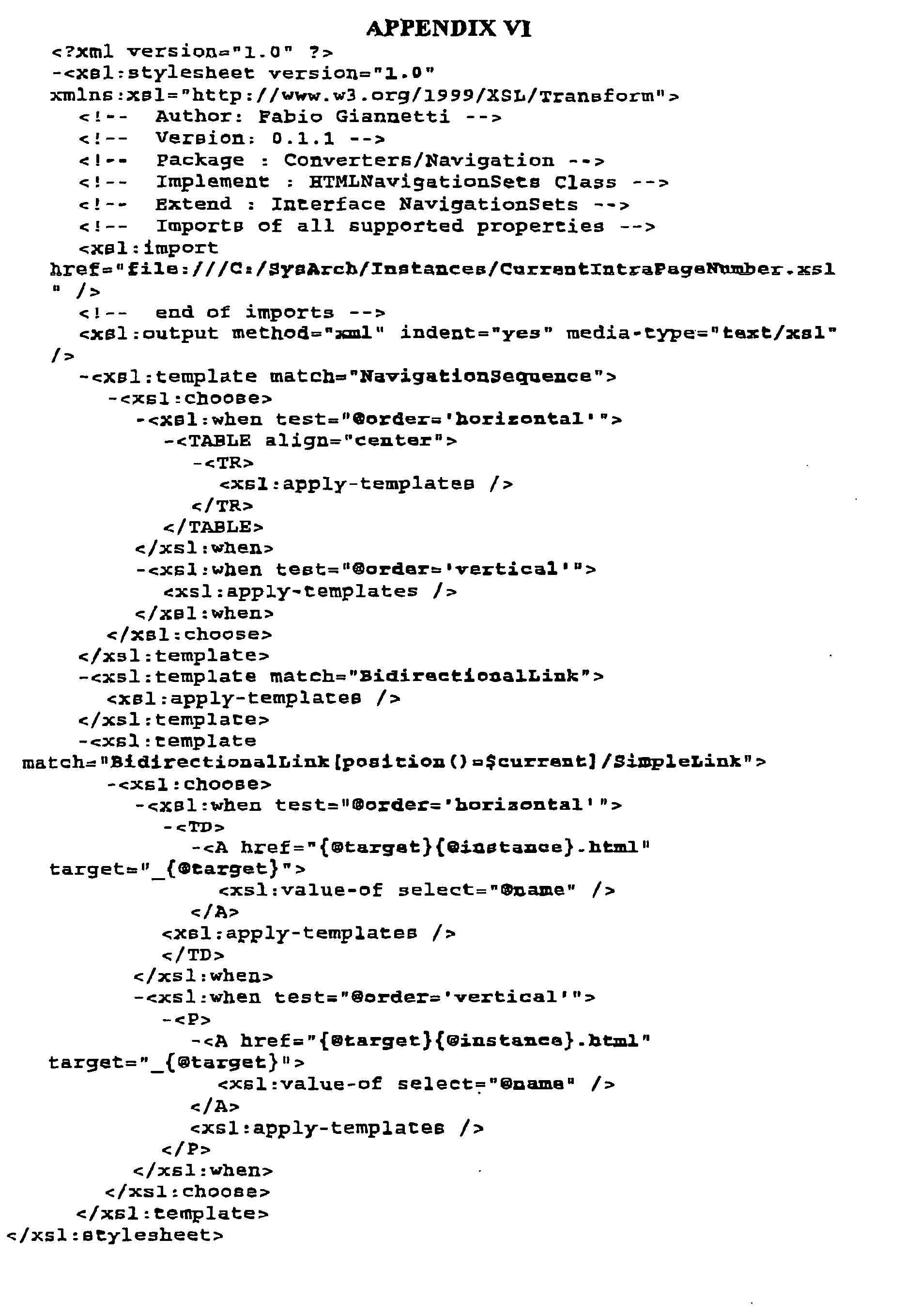

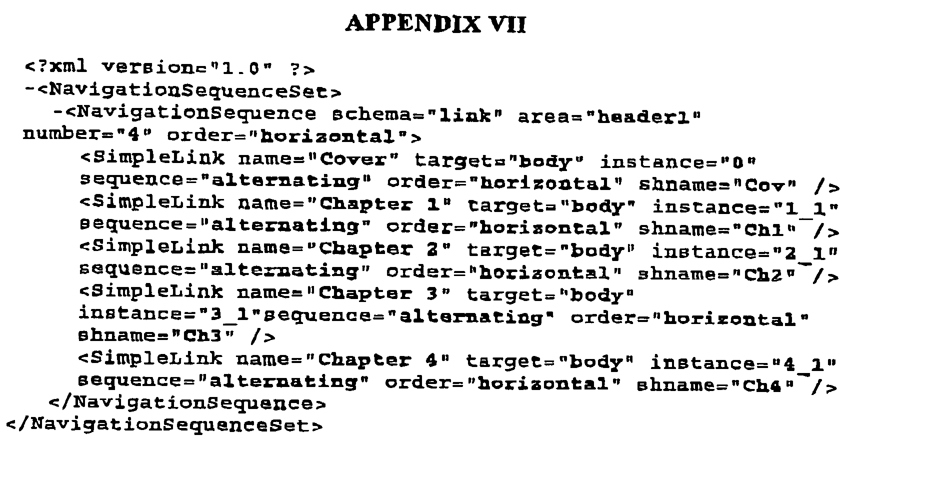

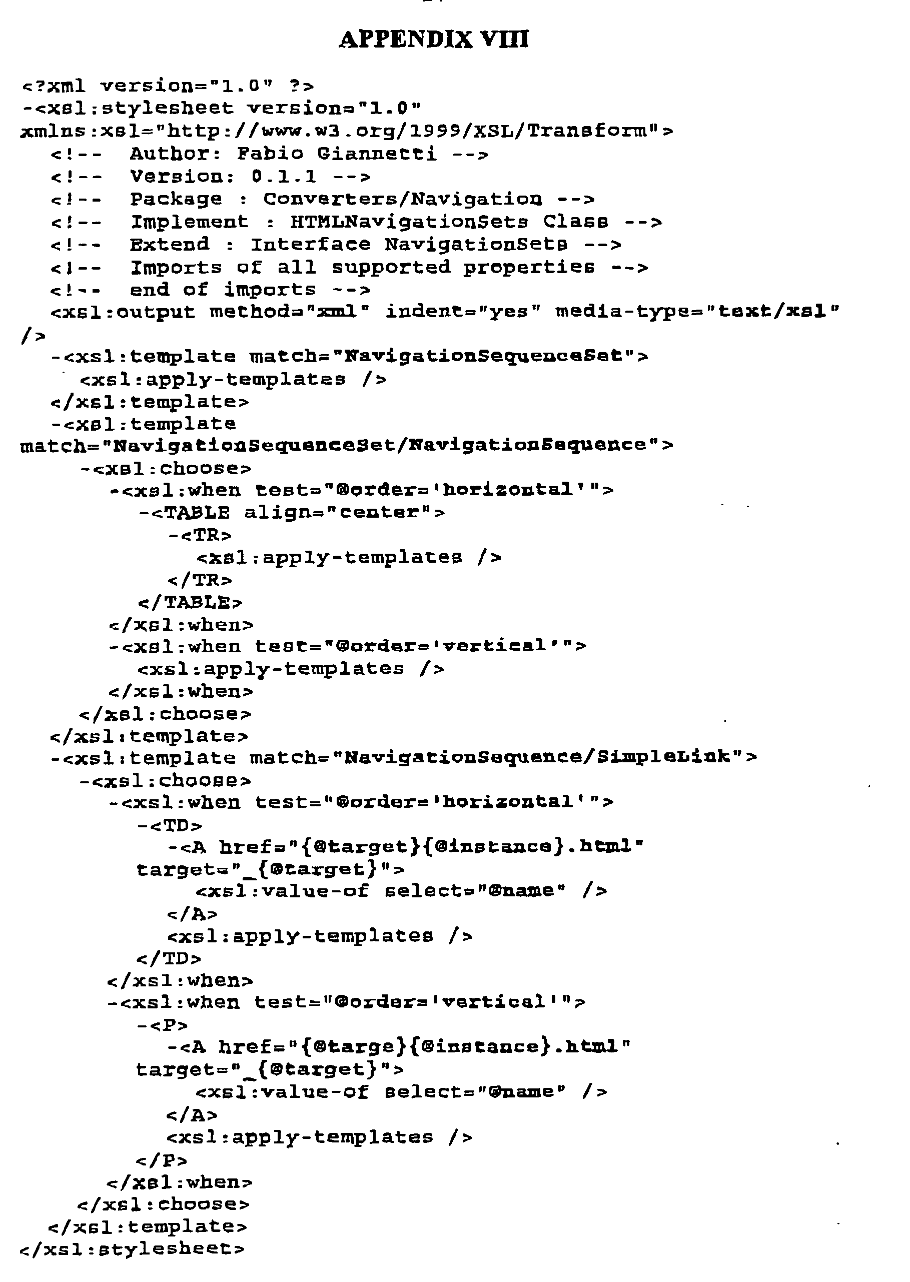

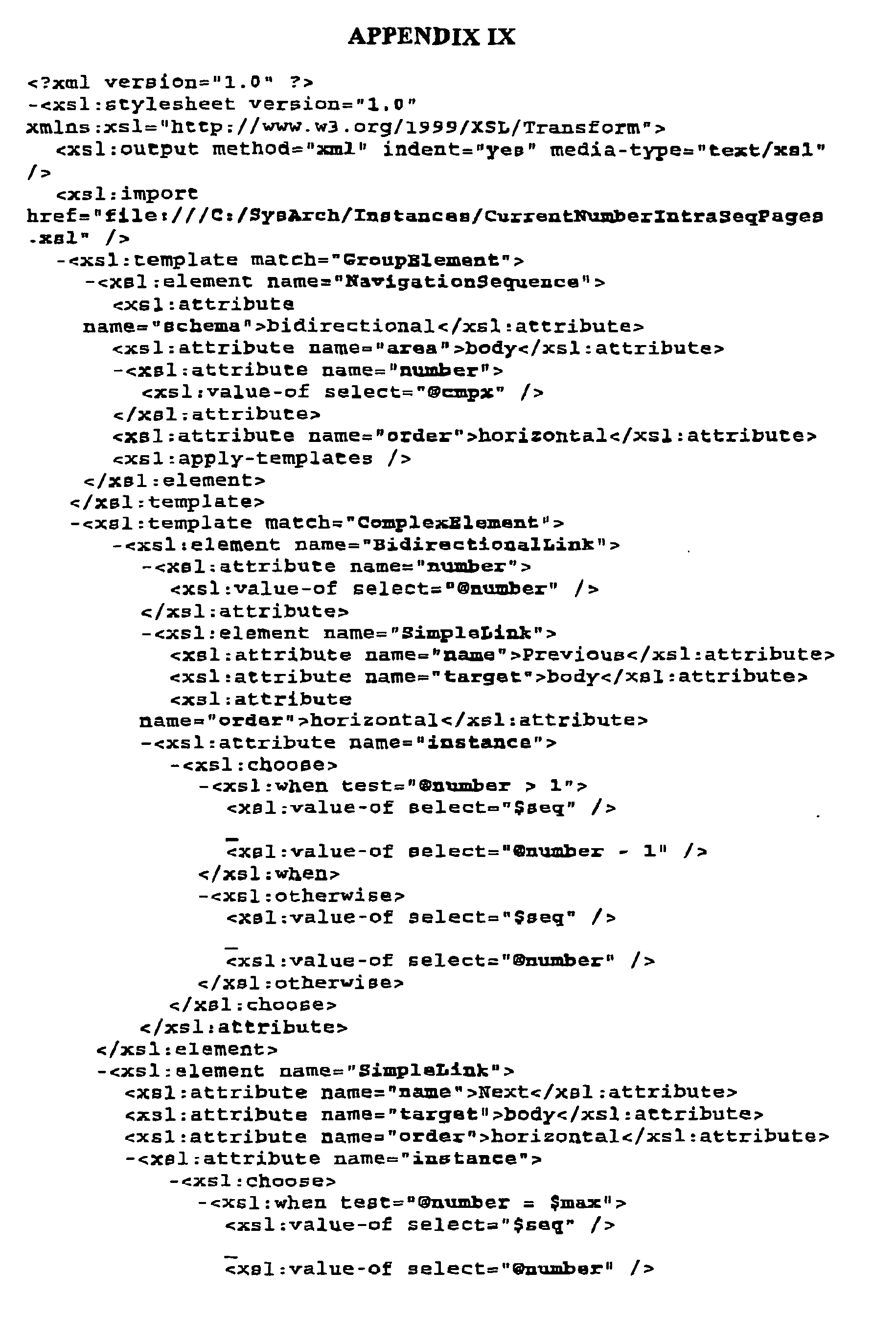

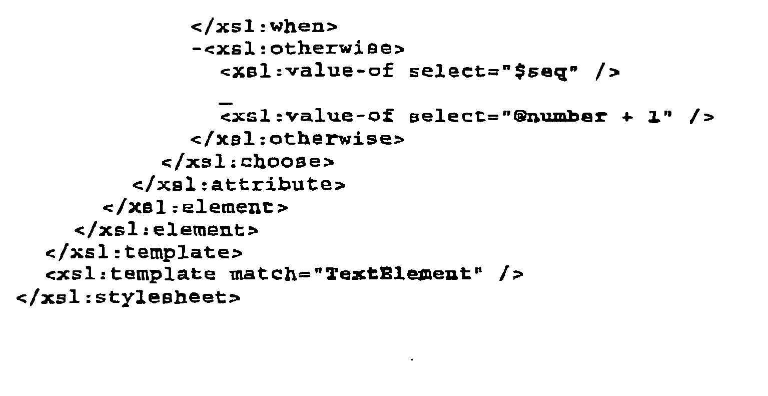

## Claims

1. A method of generating a device-specific document (302) for transmission to at least one data-receiving device (24,26,28), said method comprising:
producing the device-specific document (302) suitable for transmission to the at least one data-receiving device (24, 26, 28) from a first (300), a second (306), and a third (304) portion, wherein the first portion (300) is document content which is arranged to be divided into a plurality of divided parts when displayed on the at least one data-receiving device (24,26,28), the second portion (306) defines how the document content should be displayed on the at least one data-receiving device (24,26,28), and the third portion (304) defines how the divided parts of the document content are interrelated;
**characterised in that**:
if the first portion (300) requires the addition of sub-navigation therein to allow the at least one data-receiving device (24,26,28) to display the first portion (300) the method comprises creating a modified third portion (304,307) specified for the at least one data-receiving device (24,26,28) to enable the device-specific document (302) to be produced.

2. A method according to claim 1 which is capable of generating multiple sub-pages from the first portion (300) with an intra-navigation system therein specified in the third portion (304).

3. A method according to claim 2 in which the sub pages are arranged to be shown as separate documents when displayed on the at least one data-receiving device (24,26,28).

4. A method according to any preceding claim wherein the modified third portion (304,307) is generated from the first (300), the second (306), and the third portions (304).

5. A method according to claim 4 wherein the modified third portion (304) is subsequently combined with the first portion (300) to generate the data suitable for transmission (302).

6. A method according to any preceding claim wherein the second portion (306) is generated automatically by a processing apparatus (2) upon which the method is running.

7. A method according to claim 6 comprising generating the second portion (306) once the at least one data-receiving device (24,26,28) to which the data will be sent has been specified.

8. A method according to any preceding claim comprising causing a processing apparatus (2) running the method to generate the first portion (3 00) from an original set of data.

9. A method according to claim 8 comprising causing the processing apparatus (2) to divide the original set of data into a plurality of sections, each being less than or equal to a predetermined size.

10. A method according to claim 9 comprising combining two or more sections for transmissions to the data-receiving devices that are capable of displaying more information than is contained in a single of the sections.

11. A method according to any preceding claim comprising writing any one of the following in a mark up language: the first portion (300); the second portion (306); the third portion (304).

12. A method according to claim 11 in which the mark-up language is XML.

13. A method according to any preceding claim in which the second portion is provided as any of the following: a file which defines how the document should be displayed on the data-receiving device; and a set of rules provided within an application running on a processing apparatus (2) providing the method.

14. A method according to any preceding claim including instructions as to how the device-specific document suitable for transmission (302) to at least one data-receiving device (24,26,28) should interact with the data-receiving device (24,26,28) comprises adding sub-navigation according to the granularity of the content of the first portion (300) when the receiving-device-specific document (302) is generated from the first (300) and the second portions (306).

15. A method according to claim 14 wherein the sub-navigation comprises any of the following: adding links, specifying to where buttons should be linked, adding buttons, adding menus.

16. A processing apparatus adapted to carry out the method of any one of claims 1 to 15.

17. An apparatus according to claims 16 in which the apparatus is a server.

18. A computer readable medium containing instructions which when loaded onto a computer cause that computer to carry out the method of claim 1 or cause that computer to function as the apparatus of claim 16.

## Patentansprüche

1. Ein Verfahren zum Erzeugen eines vorrichtungsspezifischen Dokuments (302) zur Übertragung an zumindest eine Datenempfangsvorrichtung (24, 26, 28), wobei das Verfahren folgende Schritte aufweist:
Erzeugen des vorrichtungsspezifischen Dokuments (302), das zur Übertragung an die zumindest eine Datenempfangsvorrichtung (24, 26, 28) geeignet ist, aus einem ersten (300), einem zweiten (306) und einem dritten (304) Teil, wobei der erste Teil (300) ein Dokumentinhalt ist, der angeordnet ist, um in eine Mehrzahl von geteilten Teilen geteilt zu werden, wenn derselbe an der zumindest einen Datenempfangsvorrichtung (24, 26, 28) angezeigt wird, der zweite Teil (306) definiert, wie der Dokumentinhalt an der zumindest einen Datenempfangsvorrichtung (24, 26, 28) angezeigt werden soll, und der dritte Teil (304) definiert, wie die geteilten Teile des Dokumentinhalts untereinander in Beziehung stehen;
**dadurch gekennzeichnet, dass**:
wenn der erste Teil (300) das Hinzufügen einer Unternavigation darin erfordert, um zu ermöglichen, dass die zumindest eine Datenempfangsvorrichtung (24, 26, 28) den ersten Teil (300) anzeigt, das Verfahren ein Erzeugen eines modifizierten dritten Teils (304, 307) aufweist, der für die zumindest eine Datenempfangsvorrichtung (24, 26, 28) spezifiziert ist, um zu ermöglichen, dass das vorrichtungsspezifische Dokument (302) erzeugt wird.

2. Ein Verfahren gemäß Anspruch 1, das in der Lage ist, mehrere Unterseiten aus dem ersten Teil (300) mit einem Intranavigationssystem darin, das in dem dritten Teil (304) spezifiziert ist, zu erzeugen.

3. Ein Verfahren gemäß Anspruch 2, bei dem die Unterseiten angeordnet sind, um als separate Dokumente gezeigt zu werden, wenn dieselben an der zumindest einen Datenempfangsvorrichtung (24, 26, 28) angezeigt werden.

4. Ein Verfahren gemäß einem der vorhergehenden Ansprüche, bei dem der modifizierte dritte Teil (304, 307) aus dem ersten (300), dem zweiten (306) und dem dritten Teil (304) erzeugt wird.

5. Ein Verfahren gemäß Anspruch 4, bei dem der modifizierte dritte Teil (304) nachfolgend mit dem ersten Teil (300) kombiniert wird, um die Daten zu erzeugen, die zur Übertragung (302) geeignet sind.

6. Ein Verfahren gemäß einem der vorhergehenden Ansprüche, bei dem der zweite Teil (306) automatisch durch eine Verarbeitungsvorrichtung (2) erzeugt wird, auf der das Verfahren läuft.

7. Ein Verfahren gemäß Anspruch 6, das ein Erzeugen des zweiten Teils (306) aufweist, wenn die zumindest eine Datenempfangsvorrichtung (24, 26, 28), an die die Daten gesendet werden, spezifiziert worden ist.

8. Ein Verfahren gemäß einem der vorhergehenden Ansprüche, das ein Veranlassen einer Verarbeitungsvorrichtung (2), die das Verfahren ausführt, den ersten Teil (300) aus einem ursprünglichen Satz von Daten zu erzeugen, aufweist.

9. Ein Verfahren gemäß Anspruch 8, das ein Veranlassen der Verarbeitungsvorrichtung (2) aufweist, den ursprünglichen Datensatz in eine Mehrzahl von Abschnitten zu teilen, wobei jeder kleiner oder gleich einer vorbestimmten Größe ist.

10. Ein Verfahren gemäß Anspruch 9, das ein Kombinieren von zwei oder mehr Abschnitten für Übertragungen an die Datenempfangsvorrichtungen aufweist, die in der Lage sind, mehr Informationen anzuzeigen, als in einem einzigen der Abschnitte enthalten sind.

11. Ein Verfahren gemäß einem der vorhergehenden Ansprüche, das ein Schreiben eines beliebigen der Folgenden in einer Mark-Up-Sprache aufweist: des ersten Teils (300); des zweiten Teils (306); des dritten Teils (304).

12. Ein Verfahren gemäß Anspruch 11, bei dem die Mark-Up-Sprache XML ist.

13. Ein Verfahren gemäß einem der vorhergehenden Ansprüche, bei dem der zweite Teil als ein beliebiges der Folgenden bereitgestellt wird: eine Datei, die definiert, wie das Dokument an der Datenempfangsvorrichtung angezeigt werden soll; und ein Satz von Regeln, die in einer Anwendung bereitgestellt sind, die auf einer Verarbeitungsvorrichtung (2) läuft, die das Verfahren liefert.

14. Ein Verfahren gemäß einem der vorhergehenden Ansprüche, das Anweisungen umfasst, wie das vorrichtungsspezifische Dokument, das zur Übertragung (302) an zumindest eine Datenempfangsvorrichtung (24, 26, 28) geeignet ist, mit der Datenempfangsvorrichtung (24, 26, 28) in Wechselwirkung treten soll, was ein Hinzufügen einer Unternavigation gemäß der Granularität des Inhalts des ersten Teils (300) aufweist, wenn das empfangsvorrichtungsspezifische Dokument (302) aus dem ersten (300) und dem zweiten Teil (306) erzeugt wird.

15. Ein Verfahren gemäß Anspruch 14, bei dem die Unternavigation ein beliebiges der Folgenden aufweist: Hinzufügen von Links, Spezifizieren, wohin Schaltflächen verlinkt sein sollen, Hinzufügen von Schaltflächen, Hinzufügen von Menüs.

16. Eine Verarbeitungsvorrichtung, die angepasst ist, um das Verfahren gemäß einem der Ansprüche 1 bis 15 auszuführen.

17. Eine Vorrichtung gemäß Anspruch 16, wobei die Vorrichtung ein Server ist.

18. Ein computerlesbares Medium, das Anweisungen enthält, die, wenn dieselben auf einen Computer geladen werden, bewirken, dass dieser Computer das Verfahren gemäß Anspruch 1 ausführt, oder bewirken, dass dieser Computer als die Vorrichtung gemäß Anspruch 16 wirksam ist.

## Revendications

1. Procédé de génération d'un document (302) spécifique à un dispositif en vue de sa transmission à au moins un dispositif récepteur (24, 26, 28) de données, ledit procédé comprenant les étapes consistant à:
produire le document (302) spécifique au dispositif et apte à être transmis au dispositif récepteur (24, 26, 28) de données, à partir d'une première (300), d'une deuxième (306) et d'une troisième (304) parties, où la première partie (300) est un contenu de document qui est agencé de manière à être divisé en une pluralité de fractions divisées lors d'un affichage sur le dispositif récepteur (24, 26, 28) de données, la deuxième partie (306) définissant comment le document devrait être affiché sur le dispositif récepteur (24, 26, 28) de données, et la troisième partie (304) définissant comment les fractions divisées du contenu du document sont reliées entre elles,
**caractérisé en ce que**:
si la première partie (300) demande qu'une sous-navigation soit ajoutée à l'intérieur d'elle pour permettre au dispositif récepteur (24, 26, 28) de données d'afficher la première partie (300), le procédé comprend une étape consistant à créer une troisième partie modifiée (304, 307) spécifiée pour le au moins un dispositif récepteur (24, 26, 28) de données afin de permettre la production du document (302) spécifique au dispositif.

2. Procédé selon la revendication 1 qui peut générer de multiples sous-pages à partir de la première partie (300) avec un système d'intra-navigation à l'intérieur de celle-ci spécifié dans la troisième partie (304).

3. Procédé selon la revendication 2, dans lequel les sous-pages sont agencées de manière à être présentées sous forme de documents séparés lorsqu'elles sont affichées sur le dispositif récepteur (24, 26, 28) de données.

4. Procédé selon l'une quelconque des revendications précédentes dans lequel la troisième partie modifiée (304, 307) est générée à partir de la première (300), la deuxième (306), et la troisième (304) parties.

5. Procédé selon la revendication 4 dans lequel dans lequel la troisième partie modifiée (304) est ensuite combinée avec la première partie (300) pour générer les données (302) adaptées à une transmission.

6. Procédé selon l'une quelconque des revendications précédentes dans lequel la deuxième partie (306) est générée automatiquement par un appareil de traitement (2) sur lequel le procédé est mis en oeuvre.

7. Procédé selon la revendication 6, qui comprend une étape consistant à générer la deuxième partie (306) dès lors que le dispositif récepteur (24, 26, 28) de données auquel les données seront envoyées a été spécifié.

8. Procédé selon l'une quelconque des revendications précédentes qui comprend une étape consistant à amener l'appareil de traitement (2) à mettre en oeuvre le procédé pour générer la première partie (300) à partir d'un ensemble original de données.

9. Procédé selon la revendication 8 qui comprend qui comprend une étape consistant à amener l'appareil de traitement (2) à mettre en oeuvre le procédé pour diviser l'ensemble original de données en une pluralité de sections, qui sont chacune égale ou inférieure à une dimension prédéterminée.

10. Procédé selon la revendication 9 qui comprend une étape consistant à combiner deux sections ou davantage pour des transmissions aux dispositifs récepteurs de données qui peuvent afficher plus d'information que ce qui est contenu dans une section unique.

11. Procédé selon l'une quelconque des revendications précédentes qui comprend une étape consistant à écrire dans un langage dit de markup, selon le terme anglo-saxon, l'une quelconque des parties suivantes: la première partie (300), la deuxième partie (306); la troisième partie (304).

12. Procédé selon la revendication 11 dans lequel le langage dit de markup est le XML, ou eXtended Markup Language.

13. Procédé selon l'une quelconque des revendications précédentes dans lequel la deuxième partie est fournie sous l'une quelconque des formes suivantes: un fichier qui définit comment le document devrait être affiché sur le dispositif récepteur de données; et un ensemble de règles fournies à l'intérieur d'une application en cours d'exécution sur un appareil de traitement (2) qui met en oeuvre le procédé.

14. Procédé selon l'une quelconque des revendications précédentes dans lequel des instructions précisant comment le document (302), spécifique au dispositif et adapté à une transmission à l'un au moins des dispositifs récepteurs (24, 26, 28) de données, devrait interagir avec le dispositif récepteur (24, 26, 28) de données comprennent une addition d'une sous-navigation en fonction de la granularité du contenu de la première partie (300), lorsque le document (302) spécifique au dispositif récepteur est généré à partir des première (300) et deuxième (306) parties.

15. Procédé selon la revendication 14 dans lequel la sous-navigation comprend une ou plusieurs des opérations suivantes: ajouter des liens; spécifier des emplacements où des boutons devraient être liés, ajouter des boutons, ajouter des menus.

16. Appareil de traitement apte à mettre en oeuvre le procédé conforme à l'une quelconque des revendications précédentes.

17. Appareil selon la revendication 16 dans lequel l'appareil est un serveur.

18. Support lisible par ordinateur contenant des instructions qui, lorsqu'elles sont chargées dans un ordinateur, amènent cet ordinateur à mettre en oeuvre le procédé conforme à la revendication 1 ou amènent cet ordinateur à fonctionner comme l'appareil de la revendication 16.
